# EUROPÄISCHE PATENTSCHRIFT

(11) **EP 0 589 188 B1**
(45) Veröffentlichungstag und Bekanntmachung des Hinweises auf die Patenterteilung: **05.07.1995**
(21) Anmeldenummer: 93112683.3
(22) Anmeldetag: 07.08.1993
(51) Int. Cl.: B60R 7/04, B60N 2/32

(54) **Personenkraftwagen mit einem zusätzlichen Stauraum**
Automotive vehicle with supplementary storage capacity
Voiture particulière avec capacité d'arrimage additionnelle

(30) Priorität: 22.09.1992 DE 4231627
(43) Veröffentlichungstag der Anmeldung: 30.03.1994
(73) Patentinhaber: Nyncke, Heinz, Dr., 61462 Königstein/Ts. (DE)
(72) Erfinder: Nyncke, Heinz, Dr., 61462 Königstein/Ts. (DE)
(74) Vertreter: Schubert, Siegmar, Dipl.-Ing.

(56) Entgegenhaltungen:
- DE-A- 3 540 577
- FR-A- 1 046 969
- GB-A- 1 161 870
- US-A- 3 736 601
- US-A- 3 951 448
- US-A- 4 681 367
- PATENT ABSTRACTS OF JAPAN vol. 10, no. 200 (M-498)(2256) 12 July 1986 & JP-A-61 044 038 (NISSAN SHATAI CO LTD) 3 March 1986

## Beschreibung

Die Erfindung betrifft ein Kraftfahrzeug mit einer Rücksitzbank, die ganz oder geteilt um eine rückwärtige Schwenkachse hochschwenkbar ist und unter der ein wannenförmiger Stauraum ausgebildet ist, der bei herabgeschwenkter Rücksitzbank allseits geschlossen ist, wobei die Schwenkachse oberhalb der Ebene der herabgeschwenkten Rücksitzbank ausgebildet ist.

Ein Führerhaus eines Lastkraftwagens mit diesen Merkmalen ist in der GB-B-1 161 870 beschrieben. Die Schwenkachse der Rücksitzbank wird dort über einen komplizierten Beschlag ausgebildet, der zwischen einem gehäusefesten Rahmen und der eigentlichen Rücksitzbank angeordnet ist. Der Beschlag hat zwei Schwenkachsen, die eine komplizierte Schwenkbewegung der Rücksitzbank ermöglichen.

Die DE-U-8 428 747 beschreibt einen Personenkraftwagen mit einer Rücksitzbank und mit einem wannenförmigen Stauraum, der unter dem Sitz des Personenkraftwagens ausgebildet ist, wobei der Stauraum allseitig geschlossen ist und sein Inneres von oben ggfs. frei zugänglich ist. Der Stauraum ist dort unter einem der Vordersitze angeordnet. Er wird durch einen oben offenen wannenförmigen Behälter ausgebildet, der unter dem Sitz angeordnet ist und der mit Hilfe von Schienen in Längsrichtung des Sitzes relativ zum Sitz verschoben werden kann. Hieran ist aber insbesondere der relativ hohe Platzbedarf für die Schienen - sowohl in der Breite wie auch in der Höhe - nachteilig und auch der Platzbedarf zum Herauszisehen der Wanne, damit diese frei von oben zugänglich ist. Hierzu muß - vor oder hinter dem Sitz - ein Raum etwa entsprechend der Länge der Wanne vorhanden sein, damit der gesamte Wanneninnenraum frei zugänglich ist.

Eine ähnliche Konstruktion ist in der US-PS 50 65 920 beschrieben, wobei die Wanne in der ausgezogenen Stellung zusätzlich nach unten gekippt werden kann.

Dasselbe Prinzip ist auch in der US-PS 50 96 249 beschrieben, wo die Wanne zusätzlich einen klappbaren Deckel hat.

Die US-PS 48 63 208 beschreibt den Kofferraum eines Personenkraftwagens, der in drei Abteile unterteilt ist, die jeweils über eigene Deckel verschlossen werden können.

Demgegenüber liegt der Erfindung die Aufgabe zugrunde, auf konstruktiv einfache Weise einen Personenkraftwagen mit einem zusätzlichen Stauraum zu schaffen, der den ohnedies vorhandenen Raum gut nutzt und der möglichst einfach und unbehindert zugänglich ist.

Zur Lösung dieser Aufgabe ist die Erfindung dadurch gekennzeichnet, daß bei dem als Personenkraftwagen ausgebildeten Kraftfahrzeug die Schwenkachse an einer starr nach oben weisenden Verlängerung der Rücksitzbank ausgebildet ist, und daß eine Feder vorgesehen ist, die in hochgeschwenktem Zustand der Rücksitzbank deren Gewicht entlastet und die in heruntergeschwenktem Zustand der Rücksitzbank die Schließlage vorbelastet.

Man verzichtet somit auf die aufwendige und zusätzlichen Platz benötigende Schienenführung beim eingangs erläuterten Stand der Technik, wodurch der ohnedies unter der Rücksitzbank vorhandene Platz praktisch zur Gänze für den Stauraum ausgenutzt werden kann. Hierzu muß unter der Rücksitzbank lediglich eine Wanne ausgebildet werden, die den Stauraum allseitig schützt. Der ohnedies vorhandene Boden des Personenkraftwagens unter der Rücksitzbank ist entweder der Boden der Wanne oder die Wanne hat einen gesonderten Boden.

Durch die beschriebenen Merkmale wird der Stauraum auch einfach zugänglich, weil hierzu lediglich die Rücksitzbank hochgeklappt werden muß. Auch hat der Stauraum im allgemeinen ein größeres Volumen als beim Stand der Technik, weil die Rücksitzbank viel breiter ist als einer der Vordersitze, wo bei der erwähnten Gebrauchsmusterschrift der Stauraum ausgebildet ist. Man vermeidet außerdem Komplikationen mit der Längsverschiebbarkeit der Vordersitze, weil erfindungsgemäß der Stauraum unter der Rücksitzbank angeordnet ist.

Um das Gewicht der aufgeklappten Rücksitzbank zu entlasten, ist die Feder vorgesehen. Dies kann eine Druckfeder oder auch eine Zugfeder sein.

Es wird bevorzugt, wenn der Stauraum verschließbar ist. Auch dies ist konstruktiv einfach möglich, weil man durch das Schloß lediglich dafür sorgen muß, daß die Rücksitzbank nicht mehr hochgeschwenkt werden kann.

Somit wird erfindungsgemäß ein zusätzlicher Stauraum geschaffen, wobei die Rücksitzbank ganz oder geteilt, ähnlich einer Truhenbank, aufklappbar konstruiert ist. Das Gewicht der Rücksitzbank wird wie beim Motorraumdeckel oder Gepäckraumdeckel des Personenkraftuagens durch Federmittel entlastet.

Unter dem Rücksitz ist dadurch der zusätzliche Stauraum durch eine Verkleidung geschaffen, wobei der Stauraum den Vorteil hat, nicht einsichtig zu sein und durch eine Verschlußmöglichkeit auch zusätzlich Schutz gegen Diebstahl bietet.

Das zugeklappte Rücksitzpolster rastet in einen entsprechenden Rahmen, evtl. mit zusätzlichem Zapfen, gegen mögliche Verwindung.

Die Erfindung wird im folgenden anhand eines Ausführungsbeispiels näher erläutert, aus dem sich weitere wichtige Merkmale ergeben. Es zeigt:

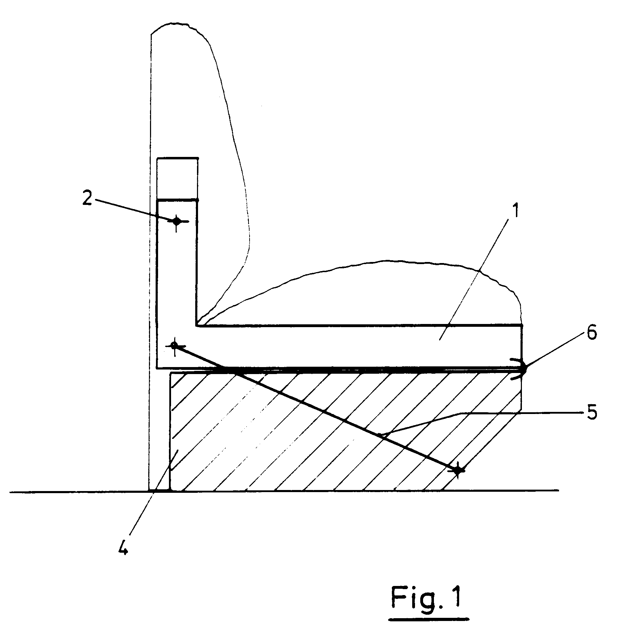

- Fig. 1: schematisch in einer Seitenansicht eine Rücksitzbank mit einem erfindungsgemäß unter ihr ausgebildeten Stauraum in der Gebrauchsstellung der Rücksitzbank;
- Fig. 2: eine Seitenansicht entsprechend Fig. 1, wobei zusätzlich gestrichelt die Rücksitzbank in der aufgeklappten Stellung eingezeichnet ist, in der der Stauraum unter der Rücksitzbank frei zugänglich ist.

Der Sitz 1 der in den Figuren gezeigten Rücksitzbank kann über eine horizontal verlaufende Schwenkachse 2 hochgeklappt bzw. wieder heruntergeklappt werden, wie dies der Doppelpfeil 3 andeutet.

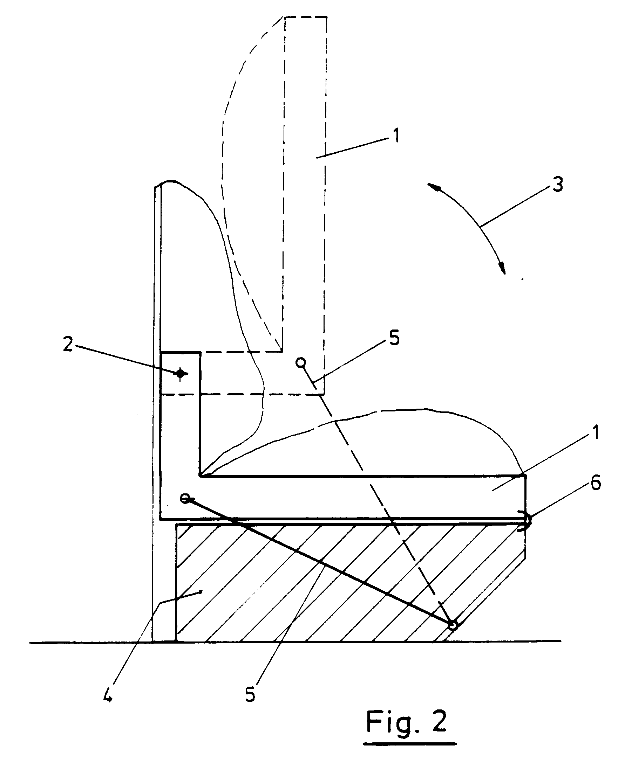

In der hochgeklappten Stellung, wie diese in Fig. 2 gestrichelt angedeutet ist, wird ein Stauraum 4 von oben frei zugänglich, der unter dem Sitz 1 ausgebildet ist. Der Stauraum wird durch eine Wanne ausgebildet, die entweder einen eigenen Boden hat oder deren Boden durch den Boden des betreffenden Kraftfahrzeugs unter dem Sitz 1 ausgebildet wird.

Damit der Sitz in der hochgeklappten Stellung nicht durch sein Gewicht wieder herunterfällt, ist eine Druckfeder 5 vorgesehen, die den Sitz sowohl in der heruntergeklappten, geschlossenen Stellung hält, wie auch in der hochgeklappten Stellung.

Außerdem kann ein bei Pos. 6 angedeutetes Schloß vorgesehen sein, so daß der Stauraum verschlossen werden kann.

Anstelle der Druckfeder 5 kann auch eine Zugfeder vorgesehen sein oder ein anderes, bekanntes Federungsmittel.

## Patentansprüche

1. Kraftfahrzeug mit einer Rücksitzbank (1), die ganz oder geteilt um eine rückwärtige Schwenkachse (2) hochschwenkbar ist und unter der ein wannenförmiger Stauraum (4) ausgebildet ist, der bei herabgeschwenkter Rücksitzbank (1) allseits geschlossen ist, wobei die Schwenkachse (2) oberhalb der Ebene der herabgeschwenkten Rücksitzbank (1) ausgebildet ist,
**dadurch gekennzeichnet,**
daß bei dem als Personenkraftwagen ausgebildeten Kraftfahrzeug die Schwenkachse (2) an einer starr nach oben weisenden Verlängerung der Rücksitzbank (1) ausgebildet ist, und daß eine Feder (5) vorgesehen ist, die in hochgeschwenktem Zustand der Rücksitzbank (1) deren Gewicht entlastet und die in heruntergeschwenktem Zustand der Rücksitzbank (1) die Schließlage vorbelastet.

2. Kraftfahrzeug nach Anspruch 1,
**dadurch gekennzeichnet,**
daß der Stauraum (4) verschließbar ist.

## Claims

1. Motor vehicle with a back seat (1) which can be swung up, either whole or in split sections, about a rear swivel axis (2) and beneath which a tub shaped storage area (4) is created, which is closed on all sides when the back seat (1) is swung down, whereby the swivel axis (2) is located above the plain of the back seat (1) when in the swung-down position,
**characterized in that,**
in the motor vehicle designed as a passenger car the swivel axis (2) is formed on a rigid upright continuation of the back seat (1) and a spring (5) is provided which relieves the weight of the back seat (1) when in the swung-up position and which prestresses the closed state when the back seat (1) is in the swung-down position.

2. Vehicle according to Claim 1,
**characterized in that,**
the storage space (4) is lockable.

## Revendications

1. Véhicule automobile comportant une banquette arrière (1), susceptible d'être relevée entière ou par éléments séparés, par basculement autour d'un axe de pivotement (2) arrière, et sous laquelle est formé un espace de rangement (4) en forme de bac, qui est fermé de tous les côtés lorsque la banquette arrière (1) est rabattue, l'axe de pivotement (2) étant placé au-dessus du plan de la banquette arrière (1) rabattue,
caractérisé en ce que dans le cas où le véhicule automobile se présente sous forme d'une voiture particulière, l'axe de pivotement (2) est réalisé sur un prolongement rigide, dirigé vers le haut, de la banquette arrière (1), et en ce qu'il est prévu un ressort (5) qui, dans l'état relevé de la banquette arrière (1), équilibre le poids de celle-ci et qui, dans l'état rabattu de la banquette arrière (1), est précontraint pour maintenir la position fermée.

2. Véhicule automobile selon la revendication 1, caractérisé en ce que l'espace de rangement (4) peut être verrouillé.
